(19)

Europäisches Patentamt

European Patent Office

Office européen des brevets

(11) **EP 4 401 416 A1**

(12) **EUROPEAN PATENT APPLICATION**

(43) Date of publication:
**17.07.2024 Bulletin 2024/29**

(21) Application number: **23220269.7**

(22) Date of filing: **27.12.2023**

(51) International Patent Classification (IPC):
*H04N 23/698* (2023.01)   *H04N 23/695* (2023.01)
*H04N 23/58* (2023.01)   *H04N 25/40* (2023.01)
*H04N 25/42* (2023.01)   *H04N 25/443* (2023.01)
*H04N 25/75* (2023.01)   *B60R 1/02* (2006.01)
*B60R 1/26* (2022.01)   *G03B 37/00* (2021.01)

(52) Cooperative Patent Classification (CPC):
**H04N 23/698; B60R 1/02; B60R 1/26; G03B 37/00;
H04N 23/58; H04N 23/695; H04N 25/40;**
H04N 23/667

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 JP 2022211221**

(71) Applicant: **CANON KABUSHIKI KAISHA
Tokyo 146-8501 (JP)**

(72) Inventor: **NAKAHARA, Ikunari
Tokyo, 146-8501 (JP)**

(74) Representative: **TBK
Bavariaring 4-6
80336 München (DE)**

(54) **IMAGING SETTING APPARATUS, IMAGE PICKUP APPARATUS, AND IMAGING SETTING METHOD**

(57)     An imaging setting apparatus (15, 15') sets, among a first pixel area (12a) for signal readout at a first frame rate on a single image sensor (12) for capturing an object image formed by a single optical system (11), and a second pixel area (12b) for signal readout at a second frame rate higher than the first frame rate, at least the second pixel area. The optical system has a characteristic such that resolution, which is a pixel number of the object image on the image sensor per unit angle of view, is different according to the angle of view, the second pixel area is set such that lowest resolution in one of the first pixel area and the second pixel area is higher than lowest resolution in the other of the first pixel area and the second pixel area.

FIG. 5

EP 4 401 416 A1

**Description**

BACKGROUND

Technical Field

One of the aspects of the embodiments relates to an image pickup apparatus for use with an on-board (in-vehicle) camera.

Description of Related Art

An on-board camera monitoring system is demanded, for example, to capture and display a rearview mirror (driving mirror) image at high resolution and a high frame rate, and to capture and display a back monitor image at a wide angle of view.

Japanese Patent Laid-Open No. 2021-34786 discloses a camera that can read signals from two pixel areas on a single image sensor at different frame rates and simultaneously generate two images. Japanese Patent No. 6349558 discloses a camera that can simultaneously perform high-resolution imaging and wide-angle imaging using one image sensor and one optical system having characteristics that are different according to an angle of view.

Japanese Patent Laid-Open No. 2021-34786 discloses setting one of two pixel areas on an image sensor, from which a signal is to be read out at a high frame rate, to an area where a moving object is detected. However, this reference is silent about a combination with an optical system having a characteristic that differs according to the angle of view, as disclosed in Japanese Patent No. 6349558.

If the camera disclosed in Patent No. 6349558 is optimized for the requirements of a rearview mirror image, it is necessary to process a wide-angle back monitor image at the same high frame rate as that for the rearview mirror image and thus image processing load increases. On the other hand, if this camera is optimized for the requirements of a back monitor image, the high resolution and high frame rate required for a rearview mirror image cannot be acquired.

SUMMARY

The present invention in its first aspect provides an imaging setting apparatus as specified in claims 1 to 9.

The present invention in its second aspect provides an image pickup apparatus as specified in claims 10 to 14.

The present invention in its third aspect provides a movable body as specified in claim 15.

The present invention in its fourth aspect provides an imaging setting method as specified in claim 16.

The present invention in its fifth aspect provides a program as specified in claim 17.

Further features of the disclosure will become apparent from the following description of embodiments with reference to the attached drawings.

BRIEF DESCRIPTION OF THE DRAWINGS

FIG. 1 illustrates the configuration of an on-board camera monitoring system according to a first embodiment.
FIGs. 2A, 2B, and 2C illustrate an angle of view and a display image of an on-board camera according to the first embodiment.
FIGs. 3A and 3B illustrate the characteristics of an optical system according to the first embodiment.
FIG. 4 illustrates an operation of the image sensor according to the first embodiment.
FIG. 5 illustrates the detailed configuration of the first embodiment.
FIGs. 6A, 6B, 6C, and 6D illustrate an angle of view and a display image of an on-board camera according to according to a second embodiment.
FIGs. 7A and 7B illustrate the characteristics of an optical system according to the second embodiment.
FIG. 8 illustrates the detailed configuration of the second embodiment.
FIG. 9 illustrates an angle of view and a display image of an on-board camera according to a third embodiment.
FIGs. 10A and 10B illustrate the detailed configuration of the third embodiment.

DESCRIPTION OF THE EMBODIMENTS

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

Referring now to the accompanying drawings, a description will be given of embodiments according to the disclosure.

FIRST EMBODIMENT

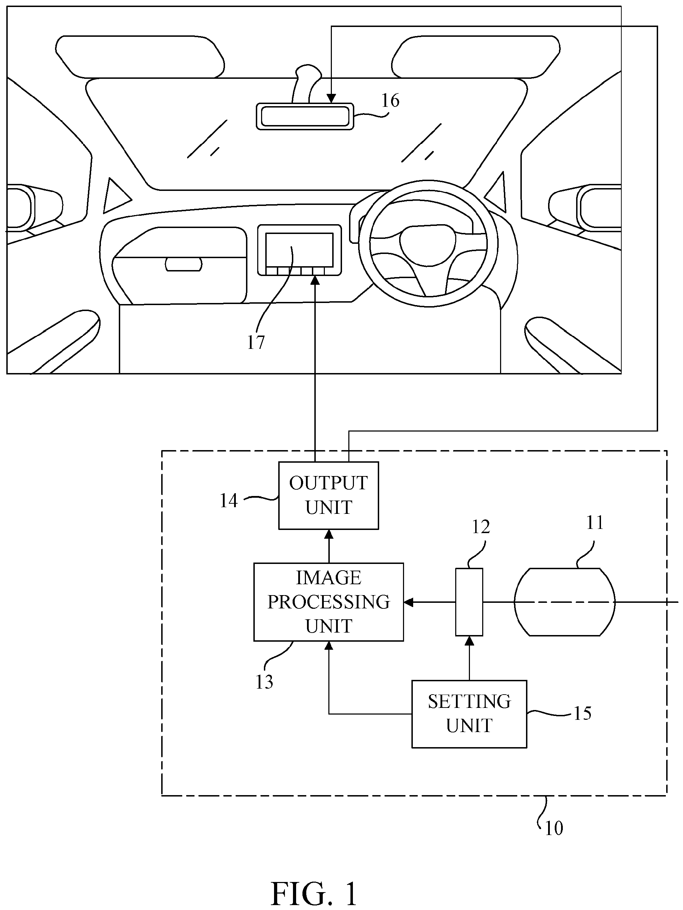

FIG. 1 illustrates the configuration of an on-board camera monitoring system according to a first embodiment. This system is mounted on a vehicle as a movable body (movable member) and includes an on-board camera 10, an electronic rearview mirror 16, and an in-dash (intra-dashboard) monitor 17. The on-board camera 10 includes an optical system 11, an image sensor 12, an image processing unit 13, an output unit 14, and a setting unit 15 as an imaging setting apparatus (setting unit). The camera monitoring system may be mounted on a moving body other than the vehicle.

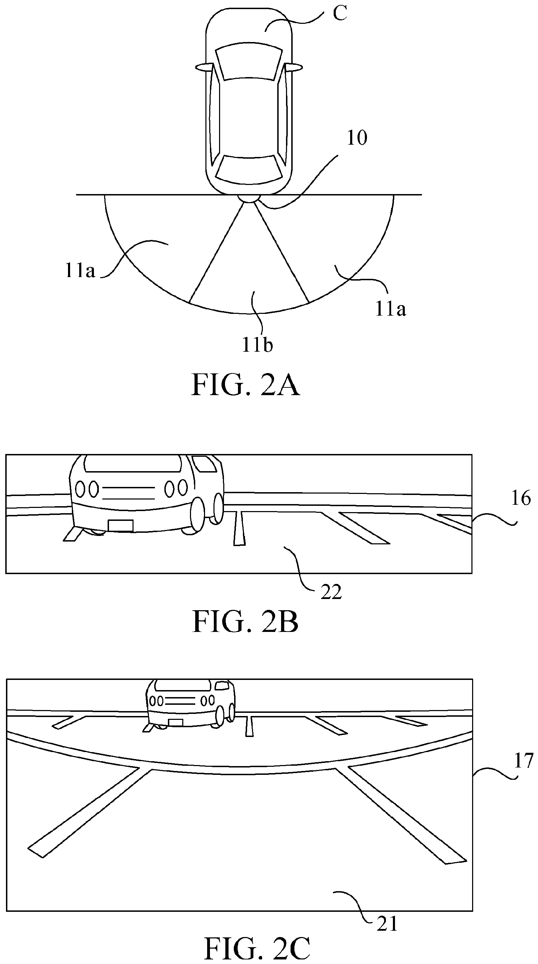

As illustrated in FIG. 2A, the on-board camera 10 fixed to the rear portion of the body of a vehicle C images the rear view of the vehicle C (directly behind the vehicle C, and rear left and right views of the vehicle C) through the single optical system 11 and the single image sensor 12, respectively. The optical system 11 according to this embodiment has a maximum angle of view of 180°, and allows imaging of the entire rear area with first angles of view 11a and 11b corresponding to the maximum angle of view, and a second angle of view 11b to capture an image directly behind the camera.

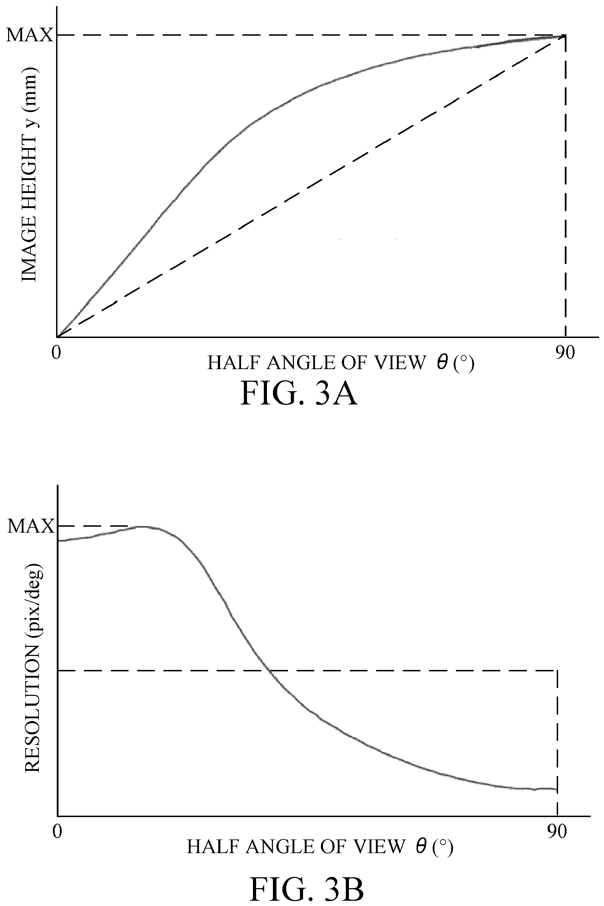

The optical system 11 has a relationship between a half angle of view θ and an image height y (θ-y projection characteristic) illustrated by a solid line in FIG. 3A. The optical system 11 has a maximum half angle of view of 90°. In the general equidistant projection (y=fθ) illustrated by a broken line, y on the imaging surface of the image sensor 12 increases in proportion to θ. On the other hand, the optical system 11 according to this embodiment has projection characteristics such that y is higher than y=fθ between the center on the optical axis and the maximum half angle of view, and an increase rate of y against θ is higher than y=fθ at an angle of view on the central side (referred to as a central angle of view hereinafter), and the increase rate of y decreases as θ increases at the angle of view on the peripheral side (referred to as a peripheral angle of view hereinafter).

In addition, the optical system 11 has a θ-resolution characteristic illustrated by a solid line in FIG. 3B that illustrates a relationship between the half angle of view θ and the optical resolution (a length of the image height y per unit angle of view or the number of pixels of an object image on the image sensor per unit angle of view: simply referred to as resolution hereinafter). The general equidistant projection illustrated by a broken line in FIG. 3B has the same resolution regardless of the angle of view. On the other hand, the optical system 11 according to this embodiment has a resolution characteristic in which the resolution is different according to an angle of view (between the central angle of view and the peripheral angle of view). More specifically, the optical system 11 has a resolution characteristic in which the resolution at the central angle of view is higher than y=fθ, the resolution becomes lower as θ becomes larger, and the resolution becomes lower than y=fθ at the peripheral angles of view. Thus, the optical system 11 forms an object image in the peripheral area on the imaging surface of the image sensor 12 at first resolution (low resolution), and forms an object image in the central area at second resolution (high resolution) higher than the first resolution. Regarding the first and second resolutions, for example, the resolution equal to or lower than a predetermined value may be the first resolution, and the resolution higher than the predetermined value may be the second resolution.

FIGs. 3A and 3B illustrate examples of the θ-y projection characteristic and θ-resolution characteristic of the optical system 11, and in a case where the θ-y projection characteristic and θ-resolution characteristic are similar to these examples, an optical system having other characteristics may be used.

The optical system 11 may satisfy the following inequality:

$$1 < \frac{f \times \sin\theta_{max}}{y(\theta_{max})} \leq A \qquad (1)$$

where $y(\theta)$ is a projection characteristic, $\theta$max is a maximum half angle of view, f is a focal length of the optical system 11, and A is a predetermined constant. Setting the lower limit to 1 can make the central resolution higher than that of a fisheye lens using the orthogonal projection method (y = f×sin θ), which has the same maximum imaging height, and setting the upper limit to A can maintain an angle of view equivalent with that of the fisheye lens and secure excellent optical performance. The predetermined constant A may be determined based on the balance between an area having the first resolution and an area having the second resolution and may be set to 1.9 to 1.4.

This optical system can provide high resolution in the area having the second resolution and enable a wider angle of view to be imaged by reducing the increase amount of the image height y per unit half angle of view θ in the area having the first resolution. Therefore, this optical system can provide an imaging range with a wide angle of view equivalent with that of a fisheye lens and acquire the high resolution near the central angle of view.

Moreover, the characteristic in the area having the second resolution is close to that of the central projection method (y = f×tanθ), which is the projection characteristic of a normal imaging optical system, and thus optical distortion is small and high-definition display is available. As a result, the on-board camera monitoring system can provide a visually natural sense of perspective in observing other vehicles, etc., suppress image degradation, and obtain excellent visibility.

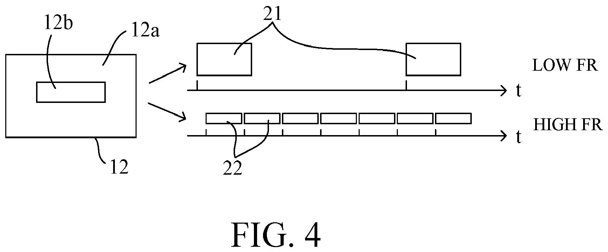

The image sensor 12 is a photoelectric conversion element in which a plurality of pixels are two-dimensionally arranged on its imaging surface, and includes a CMOS sensor, a CCD sensor, or the like. FIG. 4 illustrates an operation example of the image sensor 12, where t represents time. The image sensor 12 can simultaneously read out a pixel signal from the first pixel area (overall pixel area) 12a, which is the entire imaging surface, and a pixel signal from the second pixel area (partial pixel area) 12b, which is smaller than the first pixel area 12a, at different frame rates (referred to as FR hereinafter). More specifically, the pixel signal is read out of the first pixel area 12a at a cycle corresponding to a first FR (low FR), and the pixel signal is read out of the second pixel area 12b at a cycle corresponding to a second FR (high FR) higher than the first FR.

The image processing unit 13 generates a back monitor image 21 as a first image (overall pixel image) from the pixel signal read out of the first pixel area 12a at the first FR. The image processing unit 13 generates a rearview mirror image 22 as a second image (partial pixel image) from the pixel signal read out of the second pixel area 12b at the second FR. The image processing unit 13 performs image processing necessary to display the generated back monitor image 21 and rearview mirror image 22 and outputs the result to the output unit 14. The image processing includes development processing that converts Bayer array data into RGB raster format, white balance adjustment, gain/offset adjustment, gamma processing, color matrix processing, unevenness correction, geometric correction, and various other correction processing, resolution adjustment, color depth adjustment, frame rate adjustment, and compression.

The output unit 14 outputs the back monitor image 21 to the in-dash monitor 17 installed on the dashboard when the transmission of the vehicle is set to reverse (back) or the user (driver) operates the monitor switch to cause the in-dash monitor 17 to display it. Before the driver backs up the vehicle, the driver can check whether there are any obstacles not only directly behind the vehicle but also on the rear left and right sides of the vehicle by viewing the back monitor image 21 with a wide angle of view (for example, 180° full angle of view) displayed on the in-dash monitor 17. In addition to the back monitor image 21, the in-dash monitor 17 can also display navigation information such as a map, TV images, and the like.

The output unit 14 outputs the rearview mirror image 22 to the electronic rearview mirror 16 provided at the front of the ceiling of the vehicle and causes the electronic rearview mirror 16 to display it. The driver can check any vehicles behind the driver's vehicle while viewing the rearview mirror image 22 displayed on the electronic rearview mirror 16.

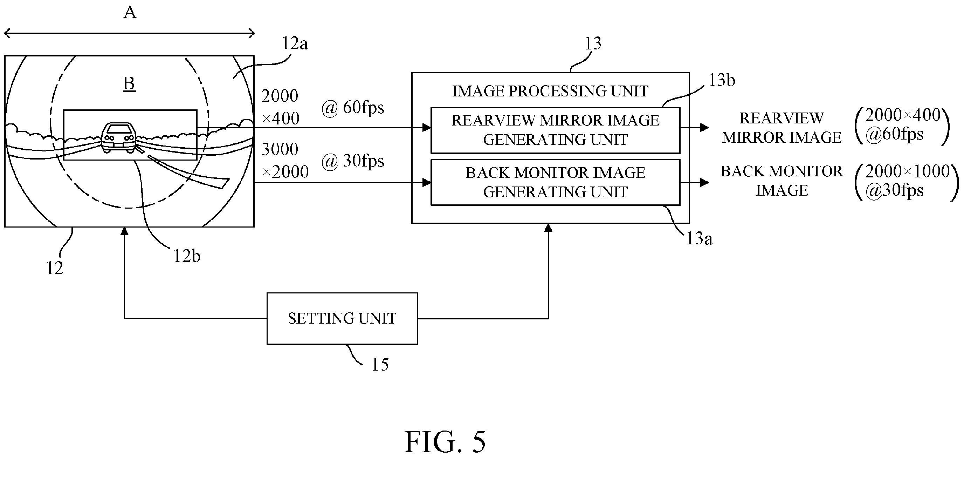

The setting unit 15 includes a computer such as a CPU that performs processing according to a program, and sets the first pixel area 12a and the second pixel area 12b on the imaging surface of the image sensor 12. Here, the setting unit 15 sets the first and second pixel areas 12a and 12b such that the lowest resolution in the second pixel area 12b is higher than the lowest resolution in the first pixel area 12a. More specifically, as illustrated in FIG. 5, the setting unit 15 sets an overall pixel area A (corresponding to the first angle of views 11a and 11b in FIG. 2A) as the first pixel area 12a on the imaging surface of the image sensor 12, in which the optical system 11 forms an object image at the first and second resolutions, that is, regardless of the resolution. At this time, the setting unit 15 sets the signal readout cycle from the first pixel area 12a to a cycle corresponding to the first FR, as described above. FIG. 5 illustrates an example in which the first pixel area 12a is an area of width 3000 pixels × length 2000 pixels, and the first FR is 30 fps (frames per second).

The setting unit 15 sets the second pixel area 12b within a pixel area B (corresponding to the second angle of view 1 1b in FIG. 2A) on the imaging surface, in which the optical system 11 forms an object image at second resolution. This embodiment sets the second pixel area 12b as a pixel area within the first pixel area 12a where the resolution of the optical system 11 is higher than a predetermined value. At this time, the setting unit 15 sets the signal readout cycle from the second pixel area 12b to the cycle corresponding to the second FR, as described above. FIG. 5 illustrates an example in which the second pixel area 12b is an area of width 2000 pixels × length 400 pixels, and the second FR is 60 fps.

In a case where the first pixel area 12a is fixed as the overall pixel area A, the setting unit 15 sets only the second pixel area 12b without setting the first pixel area 12a.

The setting unit 15 sets the first FR and the first display image size to the back monitor image generating unit 13a in the image processing unit 13, which generates the back monitor image 21 from the pixel signal read out of the first pixel area 12a. FIG. 5 illustrates the example of the first display image size of width 2000 pixels × length 1000 pixels. In this case, the back monitor image generating unit 13a performs geometric deformation and cutout processing for the image read out of the first pixel area 12a, and outputs the result as a back monitor image. Thereby, the back monitor image generating unit 13a reads out the pixel signal from the first pixel area 12a at the first FR, and also generates and outputs the back monitor image 21 at the first FR and with the first display image size.

The setting unit 15 also sets the second FR and the second display image size to the rearview mirror image generating unit 13b in the image processing unit 13, which generates the rearview mirror image 22 from the pixel signal read out of the second pixel area 12b. FIG. 5 illustrates the example of the second display image size of width 2000 pixels × length 400 pixels. Thereby, the rearview mirror image generating unit 13b reads out the pixel signal from the second pixel area 12b at the second FR, and also generates and outputs the rearview mirror image 22 at the second FR and with the second display image size.

Thus, in this embodiment, the in-dash monitor 17 displays the back monitor image 21 captured at a wide angle of view at the first FR, and the electronic rearview mirror 16 displays the high-resolution rearview mirror image 22 at the second FR higher than the first FR. The electronic rearview mirror 16 is required to display a visually recognizable image at a high frame rate (for example, 60 fps or higher) and high resolution. On the other hand, the in-dash monitor 17 is required to display the back monitor image that is an image of the rearview of the vehicle captured at a wide range. Therefore, this embodiment can output a high-resolution area of the optical system 11 at a high frame rate. Therefore, this embodiment can display an electronic rearview mirror image at high resolution and a high frame rate, and output a back monitor image with a wide angle of view at a relatively low frame rate. As a result, this embodiment can simultaneously perform imaging at proper resolution and a proper frame rate and imaging at a proper angle of view while suppressing an increase in image processing load.

The setting unit 15 previously stores data about the positions and sizes (pixel number or the number of pixels) of the first and second pixel areas 12a and 12b set based on the characteristic of the optical system 11 illustrated in FIGs. 2A and 2B, and the like in the manufacturing stage of the on-board camera. In generating the back monitor image 21 and the rearview mirror image 22, the setting unit 15 sets the first and second pixel areas 12a and 12b, the first and second FRs, and the first and second display images sizes to the image sensor 12 and the image processing unit 13 based on the data. FR. Although the first pixel area to be read out of the image sensor 12 is all the pixels on the image sensor 12, the present invention is not limited to this example, and a predetermined area of the image sensor 12 may be used as the first pixel area.

For example, the setting unit 15 may set an area of 3000 pixels × 1000 pixels area in the lower half on the image sensor 12 in FIG. 5 as the first pixel area. In this case, displaying the back monitor image generated by the image processing unit 13 based on the first pixel area to the driver can increase the driver's visibility near the ground behind the vehicle, and suppress the image processing load of the image processing unit 13 and the transmission band between the image sensor 12 and the image processing unit 13.

In such a range that the lowest resolution of the second pixel area is higher than the lowest resolution of the first pixel area, the setting unit 15 is instructed to change the positions and sizes of the first pixel area 12a and the second pixel area 12b based on the user's instruction. For example, a menu image serving as a user interface may be displayed on the in-dash monitor 17 so that the user may be able to select the position and size of the first pixel area 12a through the menu image, and the setting unit 15 may set the first pixel area 12a at the selected position and with the selected size. Similarly, a menu image serving as a user interface may be displayed on the electronic rearview mirror 16 so that the user may be able to select the position and size of the second pixel area 12b through the menu image, and the setting unit 15 may set the second pixel area 12b at the selected position and with the selected size.

SECOND EMBODIMENT

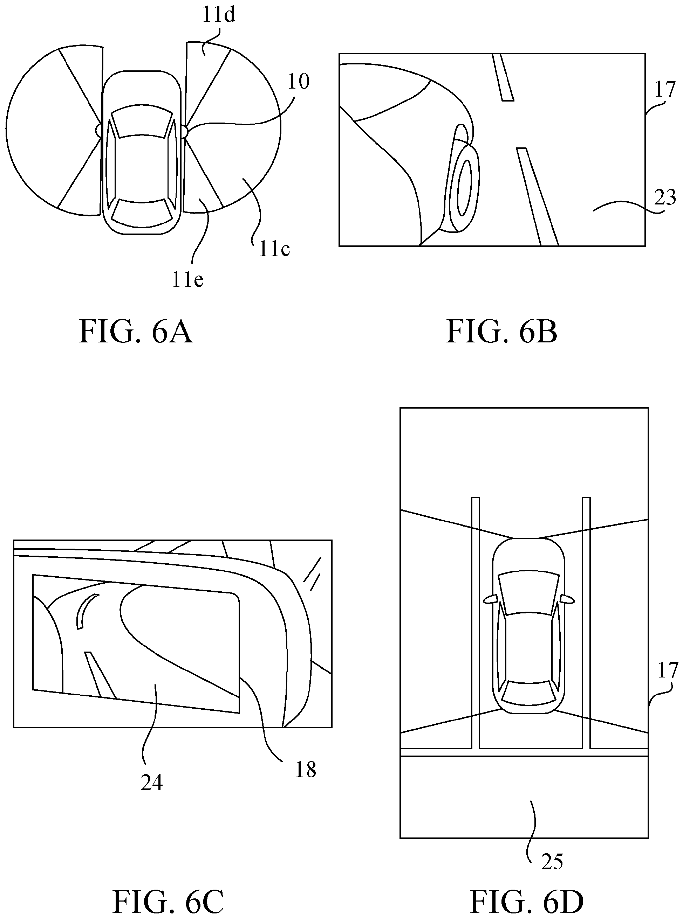

A description will now be given of a second embodiment. In this embodiment, as illustrated in FIG. 6A, the on-board camera 10 fixed to the side of the body of the vehicle C captures an image of the sideview of the vehicle C (direct side, side front (diagonal front), and side back (diagonal back)) through a single optical system and a single image sensor, respectively. The optical system 11 according to this embodiment also has a maximum angle of view of 180°, and allows imaging of the entire side at first angles of view 11c, 11d, and 11e, and imaging of the side front and the side back at second angles of view 11d and 11e.

A side front image 23 illustrating a view near the front wheel of the vehicle C that can be displayed on the in-dash monitor 17 (or side monitor 18), is generated, as illustrated in FIG. 6B, by the on-board camera 10 at the second angle of view 11d at the side front. The driver who has viewed the side front image 23 can confirm whether there are any obstacles around the front wheel that would be a blind spot from the driver's seat. In addition, imaging at the second angle of angle 11e at the side back can generate a sideview mirror image 24 that can be displayed on the side monitor 18 provided on the dashboard instead of the sideview mirror, as illustrated in FIG. 6C.

Imaging the entire side of the vehicle C at the first angles of view 11c, 11d, and 11e can generate a peripheral view image 25 illustrating the surroundings of the vehicle C that can be displayed on the in-dash monitor 17, as illustrated in FIG. 6D. The peripheral view image 25 is generated by combining an image generated by imaging at the first angles of view 11c, 11d, and 11e, an image generated by imaging the rear of the vehicle C as in the first embodiment, and an image generated by imaging the front of the vehicle C as in a third embodiment below. The driver can confirm whether there are any obstacles around the vehicle C by viewing the peripheral view image 25 in starting and moving the vehicle C.

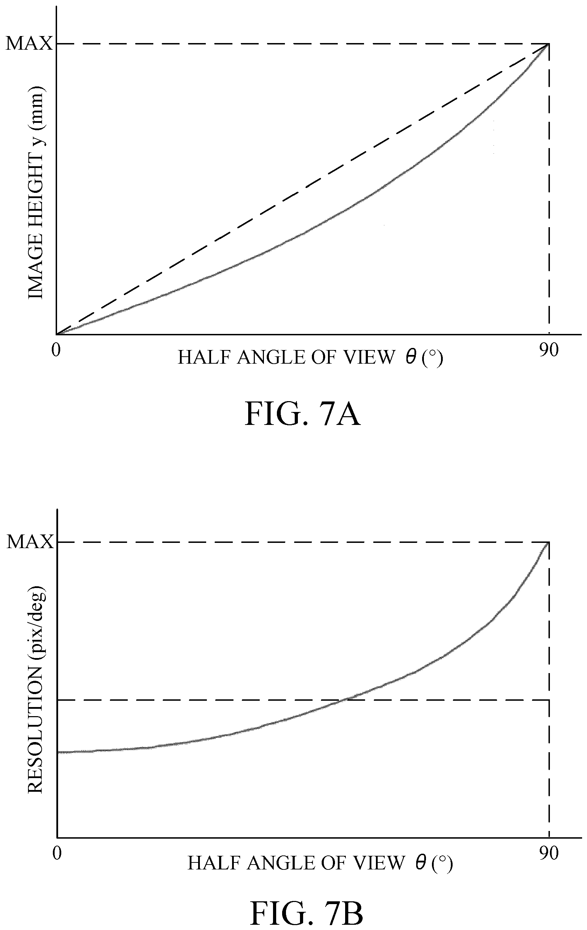

The optical system 11 according to this embodiment has a θ-y projection characteristic illustrated by a solid line in FIG. 7A. The optical system 11 has a maximum half angle of view of 90°. Similar to FIG. 3A, in the equidistant projection (y=fθ), y increases in proportion to θ. On the other hand, the optical system 11 of this embodiment has a projection characteristic such that y is lower than y=fθ between the center on the optical axis and the maximum half angle of view, the increase rate of y against θ at the central angle of view is smaller than y=fθ, and the increase rate of y increases as θ becomes larger at the peripheral angle of view.

The optical system 11 has a θ-resolution characteristic illustrated by a solid line in FIG. 7B. Similar to FIG. 3B, the equidistant projection has the same resolution regardless of the angle of view. On the other hand, the optical system 11 according to this embodiment has a resolution characteristic such that the resolution is different between the central angle of view and the peripheral angle of view. More specifically, the optical system 11 has a resolution characteristic such that the resolution at the central angle of view is lower than y=fθ, the resolution at the peripheral angles of view is higher than y=fθ, and the resolution increases as θ increases. Thus, the optical system 11 forms an object image in the central area on the imaging surface of the image sensor 12 at first resolution (low resolution), and forms an object image in the peripheral area at second resolution (high resolution) higher than the first resolution.

FIGs. 7A and 7B illustrate examples of the θ-y projection characteristic and θ-resolution characteristic of the optical system 11, and in a case where the θ-y projection characteristic and θ-resolution characteristic are similar to these examples, an optical system having other characteristics may be used.

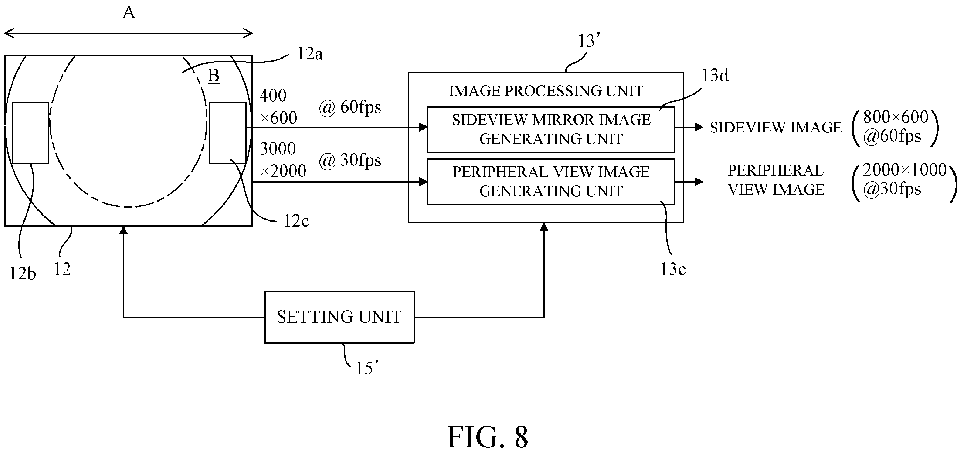

A setting unit 15' according to this embodiment illustrated in FIG. 8 sets a first pixel area 12a and second pixel areas 12b and 12c on the imaging surface of the image sensor 12. Even in this embodiment, the setting unit 15' sets the first and second pixel areas 12a, 12b, and 12c such that the lowest resolution in the second pixel areas 12b and 12c is higher than the lowest resolution in the first pixel area 12a.

More specifically, the setting unit 15' sets an overall pixel area A (corresponding to the first angles of view 11c, 11d, and 11e in FIG. 6A) as the first pixel area 12a on the imaging surface of the image sensor 12, in which the optical system 11 forms an object image at the first resolution. At this time, the setting unit 15' sets the signal readout cycle from the first pixel area 12a to a cycle corresponding to the first FR. FIG. 8 illustrates an example in which the first pixel area 12a is an area of width 3000 pixels × length 2000 pixels, and the first FR is 30 fps.

The setting unit 15' sets the pixel areas 12b and 12c within a second pixel area B (corresponding to the second angles of view 11d and 11e in FIG. 6A) on the imaging surface, in which the optical system 11 forms an object image at the second resolution. Even this embodiment sets the second pixel areas 12b and 12c within the first pixel area 12a. At this time, the setting unit 15' sets the signal readout cycle from the second pixel areas 12b and 12c to a cycle corresponding to the second FR. FIG. 8 illustrates an example in which each of the second pixel areas 12b and 12c is an area of width 400 pixels × length 600 pixels, and the second FR is 60 fps.

The setting unit 15' sets the first FR and the display image size to the peripheral view image generating unit 13c in the image processing unit 13', which generates the peripheral view image 25 using the pixel signal read out of the first pixel area 12a. FIG. 8 illustrates an example of the first display image size of width 2000 pixels × length 1000 pixels. Thereby, the peripheral view image generating unit 13c reads out the pixel signal from the first pixel area 12a at the first FR, combines the peripheral view image based on images from another camera for constituting the peripheral view, and generates and outputs the peripheral view image 25 at the first FR and with the first display image size.

The setting unit 15' also sets the second FR and the second display image size to the sideview mirror image generating unit 13d in the image processing unit 13', which generates the sideview mirror image 24 from the pixel signal read out of the second pixel area 12c. FIG. 8 illustrates an example of the second display image size of width 800 pixels × length 600 pixels. As can be understood from the θ-y projection characteristic illustrated in FIG. 7A, since the object image is compressed in the peripheral area on the imaging surface, the second display image size is set so as to generate the sideview mirror image 24 that is extended in the horizontal direction from the size of the second pixel area 12c. Thereby, the sideview mirror image generating unit 13d reads out the pixel signal from the pixel area 12c at the second FR, performs image processing such as geometric correction, and generates and outputs the sideview mirror image 24 at the second FR and with the second display image size.

Thus, in this embodiment, the peripheral view image 25 combined based on a wide imaging angle of view is displayed on the in-dash monitor 17 at the first FR, and the sideview mirror image 24 at high resolution is displayed on the side monitor 18 at the second FR higher than the first FR.

The side monitor 18 is required to display images that can be viewed at a high frame rate (for example, 60 fps or higher) and high resolution. On the other hand, the in-dash monitor 17 is required to display a peripheral view image by combining images captured at a wide angle of view. This embodiment can output a high-resolution area of the optical system 11 at a high frame rate, and thus display the sideview mirror image at high resolution and at a high frame rate. Additionally, this embodiment can output and display a peripheral view image based on a wide angle of view image at a relatively low frame rate. Therefore, this embodiment can simultaneously perform imaging at proper resolution and a proper frame rate and imaging at a proper angle of view, while suppressing an increase in image processing load.

FIG. 8 omits the side front image generating unit for generating the side front image 23 illustrated in FIG. 6B. The setting unit 15' sets the signal readout cycle from the second pixel area 12b on the imaging surface to a cycle corresponding to the second FR. The setting unit 15' sets the second FR and the second display image size to the side front image generating unit. Thereby, the side front image 23 with high resolution is generated from the pixel signal read from the second pixel area at the second FR and displayed on the in-dash monitor 17 or the side monitor 18.

Even in this embodiment, in such a range that the lowest resolution of the second pixel area is higher than the lowest resolution of the first pixel area, the setting unit 15' may make selectable the positions and sizes of the first pixel area and the second pixel areas 12b and 12c based on the user's instruction.

Images generated by pixel signals from the first and second pixel areas 12a, 12b, and 12c may be output for sensing to detect the presence of obstacles or other objects near the vehicle.

THIRD EMBODIMENT

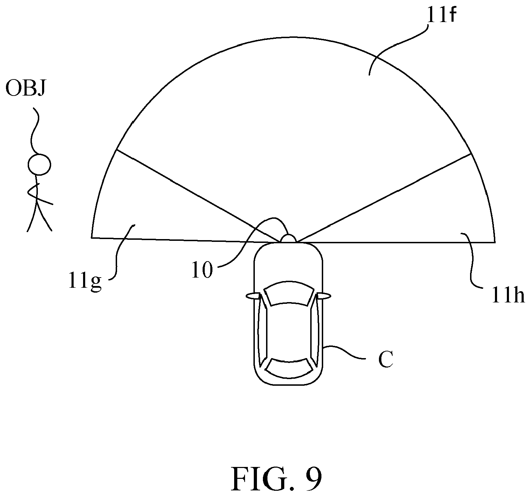

A description will now be given of a third embodiment. As illustrated in FIG. 9, the on-board camera 10 fixed to the front of the body of the vehicle C images the front view of the vehicle C (direct front, front left, and front right) through a single optical system and an image sensor. The optical system 11 according to this embodiment has a maximum angle of view of 180°, and can allow direct front imaging at the first angle of view 11f, front left imaging at the second angle of view 11g, and front right imaging at the second angles of view 11h. In FIG. 9, an object OBJ, such as a person, is approaching the vehicle C from the front left side.

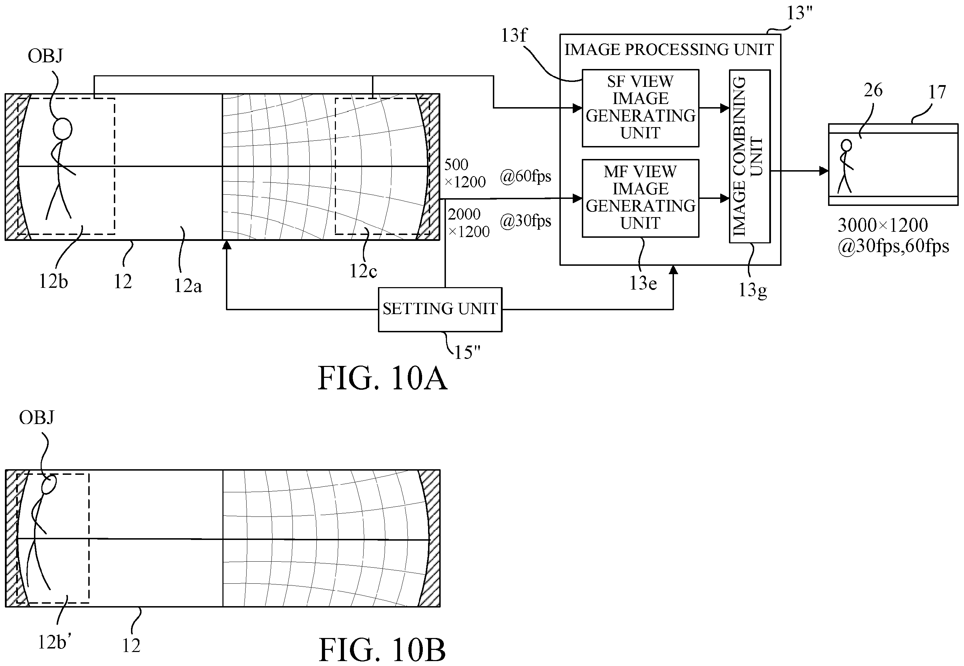

Imaging at the first angle of view 11f and imaging at the second angles of view 11g and 11h by the on-board camera 10 generate a front view image 26 illustrating the entire front as illustrated in FIG. 10A. The driver who has viewed the front view image 26 displayed on the in-dash monitor 17 can confirm an object that is directly in front of him or an object OBJ that is approaching from the front left side, which is difficult to notice from the driver's seat. The optical system 11 according to this example also has the θ-y projection characteristic and θ-resolution characteristic illustrated in FIGs. 7A and 7B in the second embodiment.

The setting unit 15" according to this embodiment illustrated in FIG. 10A sets the first pixel area 12a and the second pixel areas 12b and 12c on the imaging surface of the image sensor 12. More specifically, the setting unit 15" sets as a first pixel area 12a a pixel area (corresponding to the first angle of view 11f in FIG. 9) in the imaging surface of the image sensor 12, in which the optical system 11 forms an object image at the first resolution. At this time, the setting unit 15" sets the signal readout cycle from the first pixel area 12a to a cycle corresponding to the first FR. FIG. 10A illustrates an example in which the first FR is set to 30 fps.

The setting unit 15" sets to the second pixel areas 12b and 12c the left and right pixel areas on the imaging surface in which the optical system 11 forms the object image at the second resolution (corresponding to the second angles of view 11g and 11h in FIG. 9), respectively. This embodiment sets the second pixel areas 12b and 12c to be adjacent to the first pixel area 12a. At this time, the setting unit 15" sets the signal readout cycle from the second pixel areas 12b and 12c to a cycle corresponding to the second FR. FIG. 10A illustrates an example in which each of the second pixel areas 12b and 12c is an area of width 500 pixels × length 1200 pixels, and the second FR is set to 60 fps.

The setting unit 15" sets the first FR and the first display image size to an MF view image generating unit 13e in the image processing unit 13", which generates a main front (MF) view image from the pixel signal read from the first pixel area 12a. Here, the first display image size is, for example, width 2000 pixels × length 1200 pixels. Thereby, the MF view image generating unit 13e reads the pixel signal from the first pixel area 12a at the first FR, and generates the MF view image at the first FR and with the first display image size.

The setting unit 15" also sets the second FR and the second display image size to an side front (SF) view image generating unit 13f in the image processing unit 13", which generates left and right SF view images 24 from the pixel signals read from the second pixel areas 12b and 12c. Here, the second display image size is, for example, width 500 pixels × length 1200 pixels. Thereby, the SF view image generating unit 13f reads out pixel signals from the left and right second pixel areas 12b at the second FR, and generates the left and right SF view images 24 at the second FR and with the second display image size.

An image combining unit 13g in the image processing unit 13" connects (combines) the MF view image from the MF view image generating unit 13e and the left and right SF view images from the SF view image generating unit 13f into one, and outputs it to the in-dash monitor 17 to cause the in-dash monitor 17 to display it. Thereby, the in-dash monitor 17 displays a front view image 26 in which the resolution and FR in the center area are not high, the resolution and FR of each of the left and right peripheral areas is high, and the approach of the object OBJ from the front left and front right is easy to confirm.

FIG. 10B illustrates an object image on the image sensor 12 in a case where a general fisheye lens (y=fθ) is used as the optical system. In a case where a fisheye lens is used, an object image on the peripheral side (image of object OBJ) is formed closer to the periphery of the image sensor than that in FIG. 10A due to the θ-y projection characteristic illustrated by the broken line in FIG. 7A. That is, a second pixel area 12b' corresponding to the second pixel area 12b in FIG. 10A becomes narrower toward the periphery. From the θ-resolution characteristic illustrated by the broken line in FIG. 7B, the resolution at the left and right peripheral angles of view is as low as the resolution at the central angle of view. As a result, it becomes difficult to confirm the object OBJ in comparison with FIG. 10A.

This embodiment combines the high-resolution area formed by the optical system 11 and a pixel signal readout area on the image sensor 12 at the high FR, and it becomes easier to confirm the object OBJ in the peripheral area.

Even this embodiment may output images generated by pixel signals from the first and second pixel areas 12a, 12b, and 12c for sensing to detect the presence of obstacles and other objects near the vehicle.

Each embodiment sets a second pixel area on the image sensor, from which pixel signals are read out at a high FR (second FR) to an area where the optical system forms an object image at a high resolution (second resolution). On the other hand, a second pixel area from which pixel signals are read out at a high FR may be set in an area on the image sensor where the optical system forms an object image at a low resolution (first resolution). In this case, although the image generated by the pixel signals from the second pixel area does not have high resolution, it is an image at a high FR, and thus it is effective in sensing an object near the vehicle.

OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read-only memory (ROM), a storage of distributed computing systems, an optical disc (such as a compact disc (CD), digital versatile disc (DVD), or Blu-ray Disc (BD)™), a flash memory device, a memory card, and the like.

While the disclosure has been described with reference to embodiments, it is to be understood that the disclosure is not limited to the disclosed embodiments. The scope of the following claims is to be accorded the broadest interpretation so as to encompass all such modifications and equivalent structures and functions.

Each embodiment can cause the image pickup apparatus to perform imaging at proper resolution and a proper frame rate while suppressing an increase in image processing load.

An imaging setting apparatus (15, 15') sets, among a first pixel area (12a) for signal readout at a first frame rate on a single image sensor (12) for capturing an object image formed by a single optical system (11), and a second pixel area (12b) for signal readout at a second frame rate higher than the first frame rate, at least the second pixel area. The optical system has a characteristic such that resolution, which is a pixel number of the object image on the image sensor per unit angle of view, is different according to the angle of view, the second pixel area is set such that lowest resolution in one of the first pixel area and the second pixel area is higher than lowest resolution in the other of the first pixel area and the second pixel area.

**Claims**

1. An imaging setting apparatus (15, 15') comprising:

   a setting unit (15, 15') configured to execute the instructions to set, among a first pixel area (12a) for signal readout at a first frame rate on a single image sensor (12) configured to capture an object image formed by a single optical system (11), and a second pixel area (12b) for signal readout at a second frame rate higher than the first frame rate, at least the second pixel area, **characterized in that** in a case where the optical system has a characteristic such that resolution, which is a pixel number of the object image on the image sensor per unit angle of view, is different according to the angle of view, the setting unit sets the second pixel area such that lowest resolution in one of the first pixel area and the second pixel area is higher than lowest resolution in the other of the first pixel area and the second pixel area.

2. The imaging setting apparatus according to claim 1, **characterized in that** in a case where the optical system has the characteristic, the setting unit sets the second pixel area such that the lowest resolution in the second pixel area is higher than the lowest resolution in the first pixel area.

3. The imaging setting apparatus according to claim 2, **characterized in that** in a case where the optical system has a characteristic such that the resolution at an angle of view on a central side is higher than the resolution at an angle of view on a peripheral side, the setting unit sets the second pixel area on the central side of the image sensor.

4. The imaging setting apparatus according to claim 2, **characterized in that** in a case where the optical system has a characteristic such that the resolution at an angle of view on a peripheral side is higher than the resolution at an angle of view on a central side, the setting unit sets the second pixel area on the peripheral side of the image sensor.

5. The imaging setting apparatus according to claim 2, **characterized in that** the setting unit sets to the second pixel area, a pixel area on the image sensor that corresponds to an angle of view in which the resolution is higher than a predetermined value.

6. The imaging setting apparatus according to any one of claims 1 to 5, **characterized in that** the setting unit sets the second pixel area within the first pixel area.

7. The imaging setting apparatus according to any one of claims 1 to 6, **characterized in that** the setting unit sets the second pixel area to be adjacent to the first pixel area.

8. The imaging setting apparatus according to any one of claims 1 to 7, **characterized in that** the setting unit sets the second pixel area at a position and with a size selected by a user.

9. The imaging setting apparatus according to any one of claims 1 to 8, **characterized in that** the optical system has a characteristic such that the resolution is higher than that of equidistant projection at one of angle of views on a central side and a peripheral side angles of view and is lower than that of the equidistant projection.

10. An image pickup apparatus (10) comprising:

the imaging setting apparatus (15, 15') according to any one of claims 1 to 9;
the single optical system (11);
the single image sensor (12); and
an image generating unit (13) configured to generate a first image at the first frame rate using a signal read out of the first pixel area (12a), and a second image at the second frame rate using a signal read out of the second pixel area (12b).

11. The image pickup apparatus according to claim 10, **characterized in that** the image pickup apparatus is mounted on a vehicle (C) and images a rearview of the vehicle,

wherein the lowest resolution in the second pixel area is higher than the lowest resolution in the first pixel area, and
wherein the first image is output as a back monitor image, and the second image is output as a rearview mirror image.

12. The image pickup apparatus according to claim 10, **characterized in that** the image pickup apparatus is mounted on a vehicle (C) and images a sideview of the vehicle,

wherein the lowest resolution in the second pixel area is higher than the lowest resolution in the first pixel area, and
wherein the first image is output as a peripheral view image, and the second image is output as a sideview mirror image or an image near a front wheel of the vehicle.

13. The image pickup apparatus according to claim 10, **characterized in that** the image pickup apparatus is mounted on a vehicle (C) and images a front view of the vehicle,

wherein the lowest resolution in the second pixel area is higher than the lowest resolution in the first pixel area, and
wherein a front view image is output which includes a directly front image as the first image and front left and right images as the second image.

14. The image pickup apparatus according to any one of claims 10 to 13, **characterized in that** the image pickup apparatus is mounted on a vehicle (C), and wherein at least one of the first and second images is output for sensing an object near the vehicle.

15. A movable body (C) comprising:

the image pickup apparatus (10) according to any one of claims 10 to 14; and
a body mounted with the image pickup apparatus.

16. An imaging setting method comprising a step of setting, among a first pixel area for signal readout at a first frame rate on a single image sensor configured to capture an object image formed by a single optical system, and a second pixel area for signal readout at a second frame rate higher than the first frame rate, at least the second pixel area,
**characterized in that** in a case where the optical system has a characteristic such that resolution, which is a pixel number of the object image on the image sensor per unit angle of view, is different according to the angle of view, the step sets the second pixel area such that lowest resolution in one of the first pixel area and the second pixel area is higher than lowest resolution in the other of the first pixel area and the second pixel area.

17. A program that causes a computer to execute the imaging setting method according to claim 16.

FIG. 1

FIG. 2A

FIG. 2B

FIG. 2C

FIG. 3A

FIG. 3B

FIG. 4

FIG. 5

EP 4 401 416 A1

FIG. 6A

FIG. 6B

FIG. 6C

FIG. 6D

MAX

IMAGE HEIGHT y (mm)

0                    HALF ANGLE OF VIEW $\theta$ (°)                    90

## FIG. 7A

MAX

RESOLUTION (pix/deg)

0                    HALF ANGLE OF VIEW $\theta$ (°)                    90

## FIG. 7B

A

12a

B

400
×600

@ 60fps

3000
×2000

@ 30fps

12c

12b 12

13'

IMAGE PROCESSING UNIT

13d

SIDEVIEW MIRROR IMAGE
GENERATING UNIT

SIDEVIEW IMAGE $\begin{pmatrix} 800{\times}600 \\ @60\text{fps} \end{pmatrix}$

PERIPHERAL VIEW IMAGE
GENERATING UNIT

PERIPHERAL
VIEW IMAGE $\begin{pmatrix} 2000{\times}1000 \\ @30\text{fps} \end{pmatrix}$

13c

SETTING UNIT

15'

FIG. 8

EP 4 401 416 A1

OBJ

11f

11g

10

11h

C

FIG. 9

FIG. 10A

FIG. 10B

Europäisches
Patentamt

European
Patent Office

Office européen
des brevets

# EUROPEAN SEARCH REPORT

**Application Number**

EP 23 22 0269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/400241 A1 (YAMANAKA GO [JP] ET AL) 23 December 2021 (2021-12-23) * abstract * * figures 1, 3, 4, 7-11 * * paragraph [0049] - paragraph [0072] * * paragraph [0105] - paragraph [0175] * | 1-17 | INV. H04N23/698 H04N23/695 H04N23/58 H04N25/40 H04N25/42 H04N25/443 |
| X | US 2022/385862 A1 (ARAI NAOHIRO [JP]) 1 December 2022 (2022-12-01) * abstract * * figures 1-5 * * paragraph [0017] - paragraph [0073] * | 1-17 | H04N25/75 B60R1/02 B60R1/26 G03B37/00 |
| X | US 2019/124277 A1 (MABUCHI KEN [JP]) 25 April 2019 (2019-04-25) * abstract * * figures 6-11 * * paragraph [0121] - paragraph [0123] * * paragraph [0145] - paragraph [0154] * | 1-17 | |
| X | US 2021/297609 A1 (KIM TAE HOON [KR] ET AL) 23 September 2021 (2021-09-23) * abstract * * figures 1-4 * * claims 1-20 * | 1-17 | TECHNICAL FIELDS SEARCHED (IPC) H04N B60R G03D G03B |
| X | US 2018/332243 A1 (AIHARA MASAYUKI [JP] ET AL) 15 November 2018 (2018-11-15) * abstract * * figures 1-3, 10-15 * * paragraph [0026] - paragraph [0088] * | 1-17 | |

The present search report has been drawn up for all claims

| Place of search | Date of completion of the search | Examiner |
|---|---|---|
| Munich | 22 May 2024 | Elyamany, Noha |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**EP 4 401 416 A1**

## ANNEX TO THE EUROPEAN SEARCH REPORT
## ON EUROPEAN PATENT APPLICATION NO.

EP 23 22 0269

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2024

| Patent document cited in search report | | Publication date | Patent family member(s) | | Publication date |
|---|---|---|---|---|---|
| US 2021400241 | A1 | 23-12-2021 | CN | 113039778 A | 25-06-2021 |
| | | | EP | 3876516 A1 | 08-09-2021 |
| | | | JP | 7282798 B2 | 29-05-2023 |
| | | | JP WO2020090511 A1 | | 14-10-2021 |
| | | | US | 2021400241 A1 | 23-12-2021 |
| | | | WO | 2020090511 A1 | 07-05-2020 |
| US 2022385862 | A1 | 01-12-2022 | JP | 2022184109 A | 13-12-2022 |
| | | | US | 2022385862 A1 | 01-12-2022 |
| US 2019124277 | A1 | 25-04-2019 | CN | 109076163 A | 21-12-2018 |
| | | | EP | 3451651 A1 | 06-03-2019 |
| | | | JP | 6795030 B2 | 02-12-2020 |
| | | | JP WO2017187811 A1 | | 07-03-2019 |
| | | | US | 2019124277 A1 | 25-04-2019 |
| | | | WO | 2017187811 A1 | 02-11-2017 |
| US 2021297609 | A1 | 23-09-2021 | CN | 113438427 A | 24-09-2021 |
| | | | KR | 102284128 B1 | 30-07-2021 |
| | | | US | 2021297609 A1 | 23-09-2021 |
| US 2018332243 | A1 | 15-11-2018 | JP | 6349558 B1 | 04-07-2018 |
| | | | JP WO2018207393 A1 | | 27-06-2019 |
| | | | US | 2018332243 A1 | 15-11-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021034786 A

- JP 6349558 B